# EUROPÄISCHE PATENTANMELDUNG

(11) **EP 1 029 637 A1**
(43) Veröffentlichungstag der Anmeldung: **23.08.2000**
(21) Anmeldenummer: 00810093.5
(22) Anmeldetag: 03.02.2000
(51) Int. Cl.: B25J 15/10, B25J 15/12

(54) **Greifer für einen Manipulator zum Greifen von empfindlichen Produkten**

(30) Priorität: 16.02.1999 CH 28999
(71) Anmelder: SIG Pack Systems AG, 8222 Beringen (CH)
(72) Erfinder: Jakob, Jürg, 3063 Ittigen (CH)
(74) Vertreter: Münch, Otto, Dipl.-Ing.

(57) **Zusammenfassung**

An einem Halter (10) sind vier parallele, nach unten abstehende Rohre (12) befestigt, in denen je ein hochelastischer Draht (15) geführt ist. Das untere Ende des Drahtes (15) ist im ungespannten Zustand bogenförmig und bildet ein Tragelement (24) zum Erfassen des Produktes (22) von unten. Das obere Ende (16) jedes Drahtes (15) ist an einer Scheibe (17) befestigt, die mit der Kolbenstange (19) eines Zylinders (20) verbunden ist. Beim Anheben der Scheibe (17) werden die Tragelemente (24) in die Rohre (12) eingezogen. Der Greifer ermöglicht eine schonende Handhabung der Produkte (22).

## Beschreibung

Die vorliegende Erfindung betrifft einen Greifer für einen Manipulator zum Greifen von empfindlichen Produkten. Solche Greifer werden z.B. benötigt, um Produkte auf einem Förderband, das sie aus einer Produktionsmaschine fördert, zu erfassen und in Verpackungsbehälter, z.B. Trays, einzufüllen.

Aus der US-A-5 263 753 ist ein Greifer bekannt. Über einen Halter mit einer nach innen bombierten Unterseite ist eine topfförmige Membran gestülpt. Der Hohlraum zwischen der bombierten Unterseite des Halters und dem Boden der Membran ist über ein Ventil an eine Vakuumpumpe angeschlossen. Längs der Peripherie des Membranbodens stehen mehrere Finger von der Membran nach unten ab. Wenn der Hohlraum evakuiert wird, legt sich der Membranboden an die Unterseite des Halters an. Damit verschwenken die Finger gegen das Zentrum. Sie können so das zu greifende Produkt erfassen, so dass es mit dem Greifer angehoben werden kann. Dieser Greifer eignet sich nicht für empfindliche Produkte, z.B. Konfiserieartikel mit Schokoladeüberzug, weil die Greiffinger am Produkt Spuren hinterlassen.

Ferner sind Sauggreifer bekannt, welche die Produkte durch Ansaugen auf ihrer Oberseite erfassen. Ein Beispiel eines solchen Sauggreifers ist in der DE-A-196 09 975 beschrieben. Auch diese Sauggreifer eignen sich nicht zum Ergreifen empfindlicher Produkte, weil sie ebenfalls Berührungsspuren auf dem Produkt hinterlassen. Bei Produkten mit fettiger Oberfläche neigen die Absaugleitungen ausserdem zu Kontaminationen durch Produktrückstände, was hygienisch bedenklich ist. Sauggreifer sind nur bei glatter Oberfläche der Produkte einsetzbar.

Der vorliegenden Erfindung liegt die Aufgabe zugrunde, einen Greifer derart auszubilden, dass er für den schonenden Transfer von empfindlichen Produkten geeignet ist. Unter "empfindliche Produkte" werden Stückgüter aus dem Konfiserie- oder Patisseriebereich wie Mohrenköpfe, Gebäcke mit Schokoladeüberzug, gefüllte Produkte mit Konfitüre, Sandwiches mit cremiger Füllung, Produkte mit hohem Butter- oder Fettgehalt, schmierende oder klebende Produkte oder Produkte mit einem Überzug aus Puderzucker, Nüssen, Streusel, Konfitüre usw. verstanden. Diese Aufgabe wird durch die Merkmalskombination der Ansprüche gelöst.

Nachfolgend werden Ausführungsbeispiele der Erfindung anhand der Zeichnungen erläutert. Darin zeigt:
- Figuren 1 bis 4: perspektivische Ansichten und Längsschnitte einer ersten Ausführungsform in zwei Betriebsstellungen,
- Figuren 5 und 6: entsprechende Längsschnitte einer zweiten Ausführungsform,
- Figur 7: eine Seitenansicht einer dritten Ausführungsform, teilweise im Schnitt,
- Figur 8: eine Draufsicht auf die dritte Ausführungsform, und
- Figur 9: eine vierte Ausführungsform.

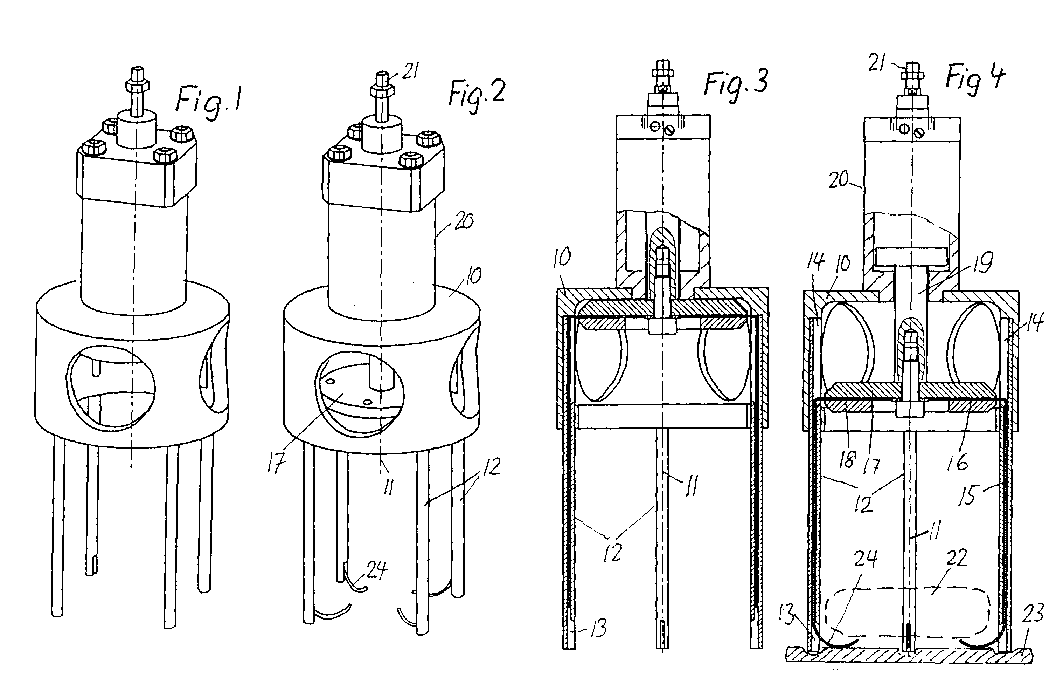

Die Ausführungsform nach Figuren 1 bis 4 hat einen Halter 10, an dem im gleichen Abstand von dessen Achse 11 über den Umfang gleichmässig verteilt vier achsparallele, als Greifarme wirkende Rohre 12 befestigt sind. Die Rohre 12 haben oben und unten einen gegen die Achse 11 offenen Längsschlitz 13, 14. In jedem Rohr 12 ist ein Draht 15 aus einem superelastischen Material, vorzugsweise aus einer Nickel-Titanlegierung geführt. Der Draht 15 ist unten im ungespannten Zustand bogenförmig gegen die Achse 11 hin abgebogen und oben rechtwinklig abgekröpft. Das abgekröpfte Ende 16 ist in eine Radialnut einer kreisförmigen Scheibe 17 eingelegt und mit einem Ring 18 gegen die Scheibe 17 gespannt. Die Scheibe 17 ist am Stirnende der Kolbenstange 19 eines Pneumatikzylinders 20 aufgeschraubt, welche am Halter 10 befestigt ist. Der Zylinder 20 hat oben eine Befestigungsschraube 21 zum Befestigen an einem Kopf eines Roboterarms.

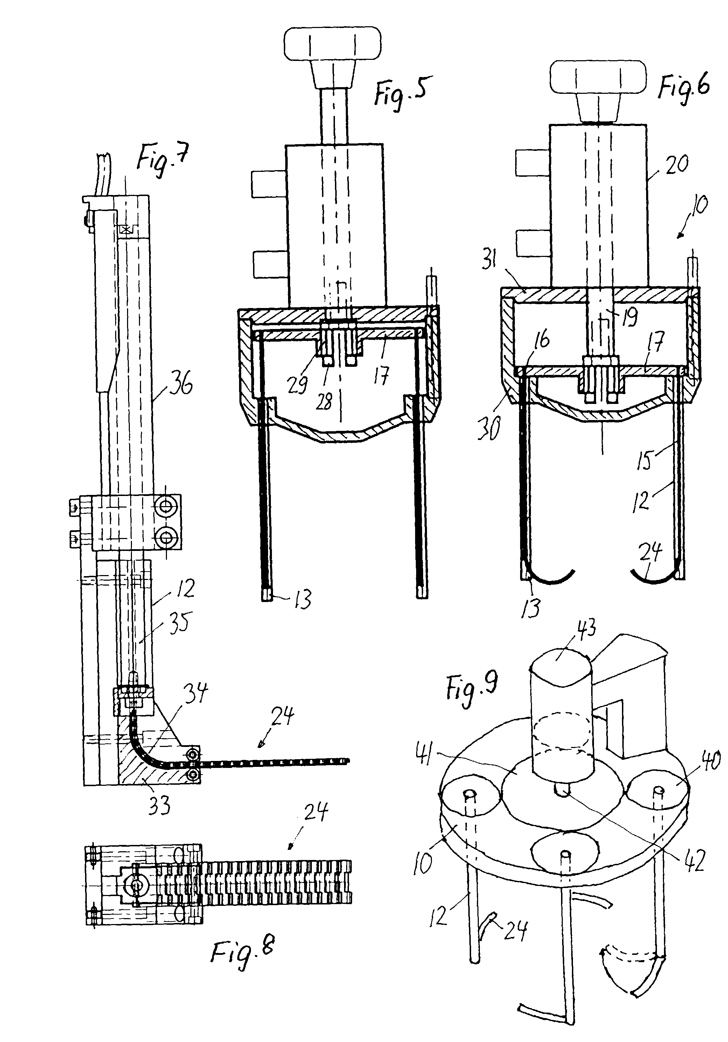

Soll ein Produkt 22 auf einem Förderband 23 ergriffen werden, so wird der Halter 10 mittels des Roboterarms derart auf das Förderband 23 abgesenkt, dass die Rohre 12 das Produkt 22 umgreifen und ihre Enden leicht in das relativ weiche Band 23 eingedrückt sind. Nun wird die Scheibe 17 mittels des Zylinders 20 aus der Stellung nach Figur 3 in jene nach Figur 4 abgesenkt. Die unteren Enden der Drähte 15 treten aus den Schlitzen 13 aus und nehmen ihre ungespannte, bogenförmige Gestalt an, so dass sie unter das Produkt 22 geschoben werden und Tragelemente 24 bilden, mit welchen das Produkt 22 weggetragen und z.B. in einen Tray eingefüllt werden kann. Beim Einfüllen in den Tray werden die Rohre 12 so weit als möglich in die Vertiefung des Trays eingeführt, damit die Fallhöhe des Produktes 22 beim anschliessenden Anheben der Scheibe 17 gering ist. Dies wird durch die dünnen Führungsrohre 12 ermöglicht. Die Gefahr der Verletzung des Produktes 22 ist dadurch und durch die Führung des Produktes 22 mit den Rohren 12 gering.

Die beschriebene Vorrichtung ermöglicht ein schonendes Handhaben der Produkte 22, ohne dass ihre Oberseite oder Seitenflächen berührt werden müssen. Die Vorrichtung ist kompakt und leicht, was wegen der Massenträgheitskräfte beim Transport der Produkte 22 vorteilhaft ist. Die Vorrichtung ermöglicht eine hohe Leistung und ist gut zu reinigen. Sie hat eine platzsparende Konstruktionsweise, was insbesondere bei der Verwendung von Mehrfachgreifern von Bedeutung ist, bei denen also mehrere Produkte 22 gleichzeitig vom Förderband 23 abgehoben werden sollen.

Alternativ zum beschriebenen Ausführungsbeispiel können die Stäbe 15 und Tragelemente 24 auch bandförmig sein, also als Bänder mit flachem Rechteckquerschnitt ausgebildet werden. Die Rohre 12 sind in diesem Fall Rechteckrohre. Je nach Breite dieser Bänder 15 reichen in diesem Fall unter Umständen auch bloss zwei gegenüberliegende statt vier Rohre 12 mit entsprechenden Bändern 15. Im Minimum ist ein Greifarm erforderlich, wenn auf der dem Arm gegenüberliegenden Seite ein Anschlag für die Produkte 22 vorgesehen ist und das bogenförmige Tragelement 24 und somit der Hub des Bandes 15 entsprechend verlängert wird.

In den nachfolgend beschriebenen Ausführungsbeispielen sind analoge Teile mit gleichen Bezugszeichen versehen, so dass sich eine detaillierte Beschreibung dieser Teile erübrigt.

Die Ausführung nach Figuren 5 und 6 unterscheidet sich von jener nach Figuren 1 bis 4 hauptsächlich durch die andere Einspannung der oberen Enden 16 der Drähte 15, die Schnappverbindung der Scheibe 17 und die Zweiteilung des Halters 10. Die Enden 16 der Drähte 15 sind eine geradlinige Fortsetzung des in den Rohren 12 geführten Drahtabschnittes und sind in Bohrungen der Scheibe 17 eingelötet oder durch Klemmelemente gehalten. Am unteren Ende der Kolbenstange 19 sind zwei federnde Zungen 28 mit einem hakenförmigen Ende montiert, auf welche eine Durchgangsbohrung 29 der Scheibe 17 aufgeschnappt ist. Der Halter 10 besteht aus einem Unterteil 30, in welchem die Rohre 12 befestigt sind, und einem Deckel 31, der am Zylinder 20 befestigt und auf dem Unterteil 30 aufgeschnappt ist. Diese Variante hat vor allem die Vorteile der geringeren Beanspruchung der Drähte 15 in ihrem oberen Endbereich bei der Bewegung und der leichteren Auswechselbarkeit z.B. zur Reinigung oder zur Umstellung auf ein anderes Produktformat.

Bei der Ausführungsform nach Figuren 7 und 8 ist das Tragelement 24 eine relativ breite Gliederkette, die sich nur nach einer Seite (bei Figur 7 nach oben) biegen lässt. Die Kette ist am Fuss 33 des Greifarms 12 in einer bogenförmigen Führung 34 geführt und am oberen Ende an einem Stab 35 befestigt, der das Betätigungsorgan eines Linearmotors 36 ist. Beim Hochziehen des Stabes 35 wird das Tragelement 24 eingezogen.

Figur 9 zeigt eine andere Ausführungsform, bei der die Greifarme 12 zylindrische Stäbe sind, die im Halter 10 drehbar aber axial unverschiebbar gelagert sind. Am oberen Ende der Stäbe 12 ist je ein Zahnrad 40 befestigt. Die Zahnräder 40 kämmen mit einem zentralen Zahnrad 41, das an der Abtriebswelle 42 eines Servogetriebemotors 43 befestigt ist. Am unteren Ende sind die flachen, etwas bogenförmigen, in einer gemeinsamen Radialebene angeordneten Tragelemente 24 starr an den Stäben 12 befestigt. Beim Betätigen des Motors 43 verschwenken die Tragelemente 24 aus der dargestellten Grundstellung gemeinsam in die beim einen Tragelement 24 gestrichelt gezeichnete Tragstellung, in welcher sie unter das Produkt 22 geschoben sind. Bei dieser Variante sind die Greifarme 12 und Tragelemente 24 besonders einfach zu reinigen. Statt der Zahnradübertragung der Drehbewegung der Abtriebswelle 42 sind natürlich auch Gelenkhebelübertragungen möglich, was den erforderlichen Durchmesser des Halters 10 vermindert.

## Patentansprüche

1. Greifer für einen Manipulator zum Greifen von empfindlichen Produkten (22), umfassend einen Träger (10), von dem mindestens ein Greifarm (12) nach unten absteht, von dessen unterem Ende zumindest in einer Greifstellung ein Tragelement (24) absteht, das unter das Produkt (22) schiebbar ist, um das Produkt (22) durch Tragen auf seiner Unterseite anzuheben, sowie einen Antrieb (20, 36, 43), um das Tragelement (24) zwischen einer Grundstellung und der Greifstellung zu bewegen.

2. Greifer nach Anspruch 1, wobei der Greifarm (12) rohrförmig ausgebildet ist und das Tragelement (24) am unteren Ende eines im Greifarm (12) geführten Stabes (15, 35) angeordnet ist, dessen oberes Ende mit einem Huborgan (20, 36) verbunden ist.

3. Greifer nach Anspruch 2, wobei der Stab (15) biegeelastisch ist und vorzugsweise aus einer Nickel-Titanlegierung besteht, und wobei sein unteres Ende im ungespannten Zustand bogenförmig ausgebildet ist und das Tragelement (24) bildet.

4. Greifer nach Anspruch 3, wobei der Stab (15) als Draht oder flaches Band ausgebildet ist.

5. Greifer nach Anspruch 2, wobei das Tragelement (24) eine nur nach einer Seite biegsame Gliederkette ist, und der Greifarm (12) am unteren Ende eine bogenförmige Führung (34) hat, in welcher die Gliederkette um annähernd 90° umgelenkt ist.

6. Greifer nach Anspruch 1, wobei der Greifarm (12) um seine Längsachse drehbar am Halter (10) befestigt ist und das Tragelement (24) vom unteren Ende des Greifarms (12) annähernd rechtwinklig absteht, und wobei ein Betätigungsorgan (43) zum Schwenken des Greifarms (12) zwischen zwei Stellungen am Halter (10) angeordnet ist.

7. Greifer nach einem der Ansprüche 1 bis 6, wobei am Halter (10) mindestens drei, vorzugsweise vier Greifarme (12) über einen Umfang verteilt angeordnet sind und in der Greifstellung die Tragelemente (24) gegen das Zentrum dieses Umfangs gerichtet sind.

8. Greifer nach Anspruch 7, wobei alle Tragelemente (24) durch einen gemeinsamen Antrieb (20, 36, 43) aus der Grundstellung in die Greifstellung bewegbar sind.
